# EUROPÄISCHE PATENTSCHRIFT

(11) **EP 1 110 594 B1**
(45) Veröffentlichungstag und Bekanntmachung des Hinweises auf die Patenterteilung: **23.07.2003**
(21) Anmeldenummer: 99124598.6
(22) Anmeldetag: 10.12.1999
(51) Int. Cl.: B01D 53/22, B01D 71/02, C01B 13/02, C04B 35/01

(54) **Verwendung und Herstellung einer sauerstoffionen- und elektronenleitende Keramikmembran**
Use and preparation of a mixed conducting ceramic membrane
Utilisation et préparation d'une membrane mixte conductrice

(43) Veröffentlichungstag der Anmeldung: 27.06.2001
(73) Patentinhaber: Hermsdorfer Institute für Technische Keramik e.V., 07629 Hermsdorf (DE)
(72) Erfinder: Groschwitz, Ralf, 07318 Saalfeld (DE); Kaps, Christian, Prof. Dr., 07749 Jena (DE); Kriegel, Ralf, 07768 Kahla (DE); Pippardt, Ute, 07639 Weissenborn (DE); Sommer, Elmar, 07318 Saalfeld (DE); Voigt, Ingolf, Dr., 07743 Jena (DE)
(74) Vertreter: Däsch, Götz, Dipl.-Ing.

(56) Entgegenhaltungen:
- EP-A- 0 705 790
- DE-A- 4 406 276
- DE-A- 19 826 496
- DATABASE CHEMABS [Online] CHEMICAL ABSTRACTS SERVICE, COLUMBUS, OHIO, US LABRINCHA, J. A. ET AL: "Structural Stabilization and electrical characterization of CaMnO3 based materials" retrieved from STN Database accession no. 125:72869 CA XP002137192 & BOL. SOC. ESP. CERAM. VIDRIO (1995), 34(5 Y 6), 405-408 ,1995,

## Beschreibung

Die Erfindung betrifft eine sauerstoffionen- und elektronenleitende damit sauerstoffpermeable dichte Keramikmembran, ein Verfahren zu deren Herstellung sowie deren Verwendung. Die Voraussetzung für eine solche Membran ist eine Leitfähigkeit für Sauerstoffionen, die in der Regel in Oxiden gegeben ist, die kristallographische Leerstellen im Sauerstoffteilgitter aufweisen.

Die Sauerstoff-lonenleitung in Oxidkeramiken ist als Phänomen seit langem bekannt und wird in der Technik bereits in breitem Maße angewendet (O₂-selektive Elektroden, O₂-Sensoren, O²⁻-leitende Festelektrolyte, Brennstoffzelle). Voraussetzung der O²⁻-Ionenleitung in einer keramischen kristallinen Phase sind Leerstellen bzw. Vakanzen im Sauerstoff-Teilgitter der zugrundeliegenden Kristallstruktur. Das bekannteste Beispiel ist stabilisiertes Zirkonoxid (YZR, Yttrium Stabilized Zirconia), ein nahezu reiner O²⁻-Ionenleiter mit unterhalb 1000°C vemachlässigbarer Elektronenleitung.

Der Ein- bzw. Austritt des molekularen Sauerstoff in das ionenleitende Material und die damit verbundene Bildung der Sauerstoff-lonen ist mit der Aufnahme bzw. Abgabe von Elektronen verbunden. Ein Sauerstoff-Ionen leitendes Material ist deshalb nur dann für Sauerstoff permeabel, wenn Elektronen von der Seite mit dem niedrigen Sauerstoff-Partialdruck zur Seite mit dem höheren Sauerstoff-Partialdruck transportiert werden können. Dies kann bei vorwiegend ionisch leitenden Materialien durch Kontaktierung der Oberflächen und den Ladungsausgleich über einen externen Stromkreis erreicht werden.

Wenn das Membranmaterial selbst eine ausreichende Elektronenleitung besitzt, kann der Ladungsausgleich durch das Material selbst erfolgen (innerer Kurzschluß). Derartige ionisch und elektronisch leitende Materialien bezeichnet man als Mischleiter (mixed conductor). Sie ermöglichen den simultanen bzw. gekoppelten Durchtritt von Elektronen und Sauerstoff-Ionen (entgegengesetzte Richtungen) durch den kompakten, gasdichten Festkörper, was sich makroskopisch als SauerstoffPermeation durch die Keramik äußert. Stellvertretend seien hier die Arbeiten von Steele u. M. (Steele, B. C. H.: Sol. St. Ionics 63 (1992), 17) sowie von Doshi u. M. (Doshi, R., Routbort, J. L., Alcock, C. B.: Defect Diffus. For. 127-128 (1995), 39) genannt, die einen Überblick über den Stand der Technik zu geben versuchen.

Trennt man demnach zwei Gasräume mit unterschiedlichen O₂-Konzentrationen durch ein gemischt leitendes Membranmaterial voneinander (gasdicht) ab, so tritt bei ausreichender Temperaturerhöhung aufgrund der temperaturbedingten Steigerung der O²⁻-Diffusion eine O₂-Permeation vom Gasraum mit der höheren zu demjenigen mit der niedrigeren O₂-Konzentration ein. Da dieser Vorgang auf dem Transport des Sauerstoffs in ionischer Form (O²⁻-Ionen) durch das Kristallgitter des Materials beruht, erlaubt er eine hoch selektive Gasseparation. Das geschilderte Prinzip der Sauerstoffabtrennung durch gemischt leitende Membranen wurde bereits im Jahr 1971 (Spacil et. al.: US 3,630,879) patentiert, eine industrielle Anwendung scheiterte jedoch bislang an den zu geringen O₂-Permeationsraten und der anlagentechnischen Umsetzung.

Potentielle Anwendungsgebiete sind derzeit die Abtrennung von Sauerstoff aus Gasgemischen (Herstellung von Reinstsauerstoff und Inertgasen), die in-situ-Umsetzung des erzeugten Sauerstoffs in elektrochemischen Membranreaktoren (Erdgas → Synthesegas, selektive heterogene Katalyse) sowie die Nutzung des Sauerstoffs für Verbrennungsprozesse (Totaloxidation).

Gegenüber den herkömmlichen kryogenen Verfahren der Reinstgas-Erzeugung werden von der Membranzerlegung erhebliche Einsparungen erwartet. Dies spiegelt sich in einer Vielzahl von Patenten wieder (Bauer, G., Krauss, H., Kuntz, M.: DE 3 921 390; Lehmann, H.-D.: DE 4 416 134; Harral, M. W., Ward, J. D: DE 4 221 593; Lin, C.-Y., Kunkle, R. P., Feduska, W.: US 5,380,467; Srinivasan, R. S., Thorogood, R. M.: US 5,447,555; Prasad, R., Bonaquist, D. P.: EP 0 733 589 A2; Prasad, R., Gottzmann, C. F.: EP 0 743 088 A2; Strigl, R.: DE 4 027 600; Thorogod, R. M., Srinvasan, R., Yee, T. F., Drake, M. P.: US 5,240,480; Carolan, M. F., Dyer, P. N.: EP 0 663 232 A2) Vor allem für dezentrale Anlagen zur Erzeugung hochreiner Gase bieten sich die Membranverfahren an, da die Gase direkt vor Ort erzeugt werden können und die Komprimierung/Lagerung damit entfällt.

Synthesegas wird derzeit in großem Maßstab aus Erdgas (Dampf-Reforming-Prozeß) erzeugt, alternative Verfahrenkonzepte basieren auf der Umsetzung mit reinem Sauerstoff oder Luft. Sie sind derzeit gegenüber dem Dampf-Reforming-Prozeß unwirtschaftlich, da hohe Kosten für die O₂-Erzeugung bzw. die kryogene N₂-Abtrennung anfallen. Die Anwendung O₂-permeabler Membranen (Cable, T. L., Mazanec, T. J., Frye, J. G.: EP 0 399 833 B1; Balachandran, U., Poeppel, R. B., Kleefish, M. S., Kobylinski, T. P., Udovich, C. A.: US 5,356,728) in Verbindung mit Katalysatoren (Balachandran, U., Dusek, J. T., Mieville, R. L., Poeppel, R. B., Kleefish, M. S., Pei, S., Kobylinski, T. P., Udovich, C. A., Bose, A. C.: Appl. Catalysis 133 (1995), 19) würde diese Umsetzung wirtschaftlich machen, da die in-Situ-Erzeugung von O₂ nur geringe Kosten verursacht.

Bei der Verwendung fossiler Energieträger sucht man weltweit nach Möglichkeiten, Erdgas (Dichte ca. 0,7 g/l) besser nutzbar zu machen, weil die natürlichen Vorkommen wesentlich größer sind als beim Erdöl (Dichte 0,79 kg/l). Die Infrastruktur ist auf Erdöl ausgerichtet, deshalb wird nach Möglichkeiten zur preiswerten Verflüssigung des Erdgases gesucht. Im Labormaßstab und in Pilotanlagen wurden mit elektrochemischen Membranreaktoren (O₂-permeable Membranen) Ausbeuten von mehr als >97 % Methanol erreicht (Balachandran, U., Poeppel, R. B., Kleefish, M. S., Kobylinski, T. P., Udovich, C. A.: US 5,356,728).

Die Totaloxidation von Kohlenwasserstoffen in Abgasen bzw. deren Nachverbrennung unter Zuführung reinen Sauerstoffs wurde bislang in der Literatur nicht bearbeitet. Die Zuführung reinen Sauerstoffs erhöht die Effektivität von Verbrennungsprozessen beträchtlich. Abgesehen von der meist bereits vorhandenen katalytischen Aktivität der gemischt leitenden Oxidkeramiken können diese als sauerstoffpermeable Membran und gleichzeitig als Katalysatorträger eingesetzt werden. Die notwendige Prozeßtemperatur der keramischen Membran wird durch die freiwerdende Verbrennungswärme erzeugt und kann wie üblich energetisch genutzt werden (Wärmetauscher). Gegenüber der Zuführung von Verbrennungsluft (78Vol% N₂) sollte eine erhebliche Reduktion der NOₓ-Bildung erreicht werden, da dem Prozeß kein Luftstickstoff zugeführt wird. Die derzeit durch den NOₓ-Ausstoß limitierten Verbrennungstemperaturen könnten erhöht werden, woraus ein höherer Wirkungsgrad energietechnischer Anlagen resultiert. Da die verwendeten Materialien (Perowskite ABO_{3-y}) über einen weiten Bereich der Sauerstoff-Stöchiometrie stabil sind, können sie kurzeitige Schwankungen des O₂-Partialdrucks durch Abgabe/Aufnahme von materialeigenem Sauerstoff ausgleichen. Eine Erniedrigung des O₂-Partialdrucks im Reaktionsraum führt über die Abgabe des materialeigenen Sauerstoffs zu einer deutlich erhöhten O₂-Permeation (und umgekehrt), wodurch in gewissen Grenzen eine selbsttätige Regulierung erreicht wird. Publikationen und Patente konzentrieren sich bis in die Gegenwart vorzugsweise auf die Steigerung der O₂-Permeation. Neben der häufig im Vordergrund stehenden Materialoptimierung (Strigl, R.: DE 4027600; Cable, T. L., Mazanec, T. J., Frye, J. G.: EP 0 399 833 B1; Balachandran, U., Kleefish, M. S., Kobylinski, T. P., Morisette, S. L., Pei, S.: WO 9424065 A; Liu, M., Joshi, A. V., Shen, Y., Krist, K., Virkar, A. V.: US 5,478,444; ten Elshof, J. E., Bouwmeester, H. J. M., Verwej, H.: Sol. St. lonics 89 (1996), 81) wurden konstruktive Maßnahmen zur Verringerung des O²⁻-Difflusionsweges (geringe Membrandicken) (Gharbage, B., Henault, M., Pagnier, T., Hammou, A.: Mater. Res. Bull. 26 (1991), 1001; Chen, C. H., Kruidhof, H., Bouwmester, H. J. M., Burggraaf, A. J.: Mater. Sc. Engeneer. B39 (1996), 129; Yao, T.: WO 9628386 A1) und zur Verbesserung der Austauschkinetik zwischen der Gasphase und der Keramikoberfläche (poröse Trägerschichten, große spezifische Oberfläche, Katalysatorbelegung) vorgeschlagen (Carolan, M. F., Dyer, P. N.: EP 0 663 232 A2; Bouwmester, H. J. M., Kruidhof, H., Burggraaf, A. J.: Sol. St. lonics 72 (1994), 185; Kilner, J. A., De Souza, R. A., Fullarton, I. C.: Sol. St. lonics 86-88 (1996), 703).

Die in der Literatur bislang beschriebenen gemischt leitenden Materialien erreichen bei Temperaturen von 700 °C bis 800 °C Sauerstoff-Diffusionskoeffizienten von maximal 10⁻⁶ cm²/s. In Verbindung mit relativ hohen Membrandicken von über 30 µm werden relativ geringe Permeationsraten erreicht, die eine technologische Anwendung bislang weitgehend verhindern. Bei den eingesetzten Verbindungen handelt es sich vorzugsweise um Perowskite mit hohen Anteilen an SE-Elementen (SE - seltene Erden). Obwohl der starke Einfluß der Vakanzkonzentration auf die ionische Leitfähigkeit von festen lonenleitern bzw. die lonendiffusion zum Grundwissen der Festkörperchemie und -physik gehört, wird nur in wenigen aktuellen Arbeiten der Einfluß der O²⁻-Vakanzen diskutiert. Unabhängig von den Untersuchungen zur O₂-Permeation wurde jedoch mehrfach gezeigt, daß hoch SE-haltige Perowskite nur sehr geringe Sauerstoffdefizite (ABO_{3-y}; y ≤ 0,05), manchmal sogar Sauerstoffüberschuß aufweisen (Petrov, A. N., Cherepanov, V. A., Kononchuk, O. F., Gavrilova, L. Y.: J. Sol. St. Chem. 87 (1990), 69; Lankhorst, M. H. R., Bouwmester, H. J. M.: J. Elektrochem. Soc. 144 (1997), 1261). Die in der Literatur bislang untersuchten SE-Perowskite erscheinen unter diesem Gesichtspunkt als wenig geeignet. Oxide mit hohen O²⁻-Vakanzkonzentrationen sind relativ selten beschrieben worden. Die Untersuchung der Vakanzbildungs-Mechanismen wurde erst in den letzten Jahren wesentlich vorangetrieben und stützt sich vor allem auf thermogravimetrische Untersuchungen in Abhängigkeit von Temperatur und O₂-Partialdruck (Mizusaki, J., Mima, Y., Yamauchi, S., Fueki, K.: J. Sol. St. Chem. 80 (1989), 102; Mizusaki, J., Tagawa, H.:

Sol. St. lonics 49 (1991), 111). Die Konzentration der O²⁻-Vakanzen beeinflußt sehr stark die O-Diffusionsgeschwindigkeit. Zusammen mit der partialdruckabhängigen Redoxstabilität der Verbindungen wird dadurch die optimale Einsatztemperatur der Materialien festgelegt.

Ein Verfahren zur Trennung von Sauerstoff aus sauerstoffhaltigen Gasen wird von Cable u. M. Cable, T. L., Mazanec, T. J.: EP 0 705 790 A1 beschrieben. Für die mischleitenden Schichten wird im Unterschied zur vorliegender Erfindung ein Kobaltat mit Perowskitstruktur der allgemeinen Zusammensetzung A₁₋ₓA'ₓCo_{1-y-z}B_{y}B'_{z}O_{3-δ} verwendet. In DE 4 221 593 A1 wird ein manganfreier Perowskit der Zusammensetzung La₁₋ₓSrₓCo_{1-y}Fe(Ni)_{y}O_{3-δ} verwendet, in EP 0 438 902 A die Zusammensetzung La_{0,2}Sr_{0,8}Fe_{0,8}Cr_{0,1}Co_{0,1}Oₓ. In DE 4 406 276 wird Anspruch auf die Zusammensetzung (La_{1-x-y}A₁₋ₓB_{y})_{z}(Mn₁₋ᵤCᵤ)ᵥO_{D-δ} erhoben, wobei der Gesamtgehalt an Lanthaniden (La + A) mindestens 0,4 (y ≤ 0,6) betragen muß. In der vorliegenden Erfindung darf der Gehalt an Lanthaniden maximal x = 0,4 betragen, bevorzugt wird auf die Einführung von Lanthaniden verzichtet.

In EP 0 438 902 A2, EP 0 673 675 A und US 5,478,444 werden sauerstoffpermeable Membranen beschrieben, die aus einer oder mehreren ionisch leitenden Phasen und einer oder mehreren elektronisch leitenden Phasen bestehen. Im Gegensatz hierzu beschreibt die vorliegende Erfindung ein Membranmaterial, das einphasig vorliegt. Thorogood u. M. (Thorogood, R. M., Srinivasan, R., Yee, T. F., Drake, M. P.: US 5,240,480) beschreiben den mikroporösen Aufbau einer Mehrschichtmembran aus porösem Träger und dichter, dünner, gemischt leitender Schicht. Der Patentanspruch erstreckt sich auf den speziellen mikroporösen Aufbau, da dieser zu einer optimierten Permeation (Optimum zwischen kinetisch und diffusiv kontrolliertem Prozeß) bei allen gemischt leitenden Materialien führen soll. EP 0 732 139 A2 beschreibt einen modularen Aufbau von rohrförmigen sauerstoffpermeablen Membranen. Diese Ansprüche werden von der vorliegenden Erfindung nicht berührt.

EP 0 663 231 A2, EP 0 663 232 A2 und US 5,534,471 beschreiben die Kombination einer sauerstoffpermeablen Membran mit einem Katalysator, der aus einem Metall oder einem Metalloxid gebildet wird. Diese Offenbarung wird durch die vorliegende Erfindung nicht berührt.

Das Werkstoffsystem CaMnO₃, bei welchem Ca durch 0 bis 50 Molprozent Sr ersetzt ist, wurde als poröses Material zur Verwendung in Brennstoffzellen hinsichtlich seiner elektrischen Leitfähigkeit untersucht (Labrincha, J.A., Structural stabilization and electrical characterization of CaMnO₃ based materials, Bol. Soc. Esp. Ceram. y Vidrio, 34 [5-6] 405 - 408 (1995)). Die Verwendung als selektiv sauerstoffpermeables Material ist hier nicht erwähnt.

Der Erfindung liegt daher die Aufgabe zugrunde, unter Beseitigung der Mängels des Standes der Technik bei einer Membran der eingangs beschriebenen Art, den Sauerstoffdiffusionskoeffizienten insbesondere bei niedrigen Temperaturen so zu steigern, daß Sauerstoffpermeationsraten erreicht werden, die eine technische Nutzung ermöglichen.

Diese Aufgabe wird durch die in den Patentansprüchen beschriebene Erfindung gelöst.

Die vorliegende Erfindung erhebt Anspruch auf die Verwendung und Herstellung eines Membranmaterials der Zusammensetzung (Sr₁₋ₓCaₓ)_{1-y}A_{y}Mn_{1-z}B_{z}O_{3-δ}, in der A steht für Ba, Pb, Na, K, Y oder Elemente der Lanthanidengruppe oder eine Kombination dieser Elemente, in der B steht für Mg, Al, Ga, In, Sn oder Elemente der 3d-Periode oder der 4d Periode oder eine Kombination dieser Elemente, mit Werten für x von 0,2 bis 0,8, Werten für y von 0 bis 0,4, Werten für z von 0 bis 0,6 und Werten für δ, die sich aus der Einhaltung des Elektroneutralitätsprinzips ergeben.

Das Membranmaterial ist abgeleitet von der bei Normalbedingungen metastabilen kubischen Hochtemperaturphase des Strontiummanganats β-SrMnO_{3-δ}, die bereits bei niedrigen Temperaturen eine hohe Sauerstoff-Diffusion aufweist (220°C, D ≈ 10⁻⁷ cm²/s), jedoch unter Sauerstoffzutritt oberhalb 750 °C in die Tieftemperatur-Modifikation α-SrMnO₃ mit wesentlich geringerer Diffusionsgeschwindigkeit übergeht. Aufgrund der exponentiellen Zunahme der Diffusionsgeschwindigkeit mit steigender Temperatur werden im Vergleich zu den bislang bekannten Materialien bei den üblichen Anwendungstemperaturen (800 bis 1200°C) erhebliche höhere Diffusionskoeffizienten (10⁻⁵ - 10⁻³ cm²/s) bzw. eine Herabsetzung der Anwendungstemperatur erreicht, wenn die Stabilisierung der Hochtemperaturphase gelingt. Zusammen mit der Verringerung der Membranschichtdicke auf bis zu 1 µm sind damit erstmals Permeationsraten bis zu 10 l·m⁻²·s⁻¹ möglich, die die Voraussetzung für eine technologische Anwendung bilden.

Die kubische Hochtemperaturphase mit Perowskitstruktur wird erfindungsgemäß durch die teilweise Substitution des Strontiums und/oder des Mangans stabilisiert und hinsichtlich der Diffusion optimiert. Erfindungsgemäß werden kubische Perowskitphasen erhalten, die von Raumtemperatur bis zum Schmelzpunkt keine Phasenumwandlung aufweisen und thermodynamisch stabil sind. Für die optimierten Materialien werden bei 1000 °C Diffusionskoeffizienten von 10⁻⁵ cm²/s erhalten.

Die Erfindung wird nachstehend durch drei Ausführungsbeispiele für den Werkstoff der Keramikmembran und ein Ausführungeispiel für das Herstellungsverfahren dieser Keramikmembranen näher erläutert.

Die beigefügte Zeichnung zeigt die Wirksamkeit einer teilweisen Substitution von Strontium durch Calzium entsprechend dem nachfolgenden Beispiel 1 für den Werkstoff der Keramikmembran hinsichtlich des Sauerstoffdiffusionskoeffizienten.

### Beispiele für den Werkstoff der Keramikmembran

### Beispiel 1: Strontium wird teilweise durch ein kleineres A-Kation ersetzt

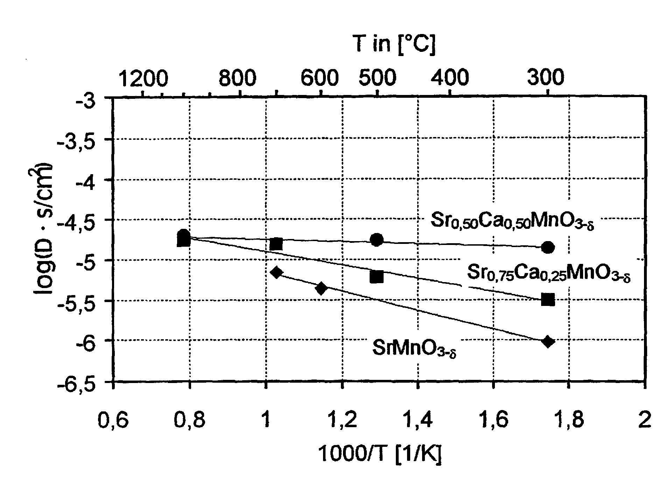

Ca²⁺ wird zur Synthese von Sr₁₋ₓCaₓMnO_{3-δ} eingesetzt, wobei x zwischen 0,2 und 0,8 variiert werden kann. Ab einer Kalzium-Konzentration von x = 0,5 wird die oben beschriebene Phasenumwandlung β-SrMnO₃ zu α-SrMnO₃ unterdrückt. Als Rohstoffe werden die Carbonate entsprechend der angestrebten Zusammensetzung eingesetzt, vermahlen und bei 1200°C kalziniert. Anschließend wird erneut aufgemahlen und für die Bestimmung des O²⁻-Difflusionskoeffizienten zu Tabletten verpreßt. Diese werden bei 1400 °C im Argonstrom 4 Stunden gesintert, wobei eine Enddichte von >95 % der Theorie erreicht wird. Abbildung 1 zeigt die Abhängigkeit des Sauerstoff-Diffusionskoeffizienten von der Zusammensetzung und der reziproken Temperatur. Während die Sauerstoff-Diffusion an reinem β-SrMnO₃ lediglich bis ca. 700 °C gemessen werden kann, sind die stabiliserten Materialien bis 1000°C meßbar. Die Phasenstabilisierung kann durch alternative Ionen erreicht bzw. unterstützt werden, so daß eine Verbindung der allgemeinen Zusammensetzung (Sr₁₋ₓCaₓ)_{1-y}A_{y}MnO_{3-δ} gebildet wird, wobei A für Ba, Pb, Na, K, Y oder Elemente der Lanthanidengruppe steht.

### Beispiel 2: Mangan wird teilweise durch ein größeres B-Kation, nämlich Cu, ersetzt

Zur Stabilisierung der kubischen Perowskitphase kann auf einen Teil des Kalziums verzichtet werden, wenn ein Teil des Mangan durch ein etwas größeres B-Kation wie beispielsweise Cu³⁺ ersetzt wird. Für die Zusammensetzungsreihe (Sr₁₋ₓCaₓ)_{1-y}A_{y}Mn_{1-z}B_{z}O_{3-δ} mit einem Substituionsgrad von z = 0,3 wird bereits bei x = 0,4 die Stabilitätsgrenze der Hochtemperaturphase erreicht. Das Material der Zusammensetzung Sr_{0,6}Ca_{0,4}Mn_{0,7}Cu_{0,3}O_{3-δ} wird analog zu Beispiel 1 aus den Rohstoffen hergestellt. Es entsteht eine stabile kubische Perowskitphase mit einem Sauerstoff-Diffusionskoeffizienten von 10⁻⁵ cm²/s bei 1000 °C.

### Beispiel. 3: Strontium und Mangan werden gleichzeitig teilweise ersetzt.

Es entsteht eine Verbindung der allgemeinen Formel (Sr₁₋ₓCaₓ)_{1-y}A_{y}Mn_{1-z}B_{z}O_{3-δ}.

Herstellungsverfahren Als Beschichtungsverfahren für poröser Träger wird das slip-casting, alternativ die Elektrophorese angewendet. Zur Erzeugung mikro- und nanokristalliner Pulver für die vorgenannten Beschichtungsverfahren kann die Mischfällung aus der Lösung der Komponenten eingesetzt werden. Bevorzugt wird jedoch die Flammenpyrolyse der in organischen Lösungsmitteln gelösten Komponenten in der turbulenten Knallgasflamme und die anschließende Abtrennung im Elektrofilter angewendet. Es werden Pulver mit Teilchendurchmessern im Bereich von 20 bis 50 nm (BET-Messung) erhalten. Als direkte Beschichtungsverfahren können weiterhin die Sol-Gel-Technik, die Spray-Pyrolyse, das thermische Spritzen und die konventionellen PVD/CVD- Verfahren Anwendung finden.

## Patentansprüche

1. Verwendung eines Materials für eine sowohl Sauerstoffionen als auch Elektronen leitende und damit sauerstoffpermeable dichte Keramikmembran zur Gewinnung von Sauerstoff aus sauerstoffhaltigen, stehenden oder strömenden Gasgemischen oder Verringerung des Sauerstoffspartialdruckes in denselben,
**dadurch gekennzeichnet,**
**dass** das Material die Zusammensetzung (Sr₁₋ₓCaₓ)_{1-y}A_{y}Mn_{1-z} B_{z} O_{3-δ}, in der A steht für Ba, Pb, Na, K, Y oder Elemente der Lantanidengruppe oder eine Kombination dieser Elemente, in der B steht für Mg, Al, Ga, In, Sn, oder Elemente der 3d-Periode oder 4d-Periode oder eine Kombination dieser Elemente, mit Werten für x von 0,2 bis 0,8, Werten für y von 0 bis 0,4, Werten für z von 0 bis 0,6 und Werten für δ, die sich aus der Einhaltung des Elektroneutralitätsprinzips ergeben, aufweist.

2. Verwendung gemäß Anspruch 1, wobei die sauerstoffpermeable Membran aus einem Mehrphasengemisch elektronisch und/oder ionisch leitender Phasen, die mehr als 10 Vol% des Membranmaterials enthält.

3. Verwendung gemäß Anspruch 1, wobei die sauerstoffpermeable Membran auf einem porösen Supportmaterial aufgebracht ist, dessen Porenanteil im Bereich von 10 % bis 85 % liegt.

4. Verwendung gemäß Anspruch 1, wobei die Oberfläche des sauerstoffpermeablen Membran einseitig oder beidseitig mit einem Katalysator belegt ist, um die Austauschkinetik mit der Gasphase oder die Umsetzung gasförmiger Stoffe in der Gasphase zu katalysieren.

5. Verfahren zur Herstellung einer sauerstoffpermeablen Membran aus einem Materials der Zusammensetzung (Sr₁₋ₓCaₓ)_{1-y}A_{y}Mn_{1-z} B_{z} O_{3-δ}, in der A steht für Ba, Pb, Na, K, Y oder Elemente der Lantanidengruppe oder eine Kombination dieser Elemente, in der B steht für Mg, Al, Ga, In, Sn, oder Elemente der 3d-Periode oder 4d-Periode oder eine Kombination dieser Elemente, mit Werten für x von 0,2 bis 0,8, Werten für y von 0 bis 0,4, Werten für z von 0 bis 0,6 und Werten für δ, die sich aus der Einhaltung des Elektroneutralitätsprinzips ergeben, wobei die Membran aus den metallhaltigen Rohstoffen durch eine Temperaturbehandlung oberhalb 500 °C sowie der Kombination einer solchen Temperaturbehandlung mit Verfahren zur Abscheidung dünner Schichten wie dem slip-casting, der elektrophoretischen Abscheidung, einem Sol-Gel-Prozeß, einem CVD- bzw. PVD-Verfahren oder einem Spray- bzw. Flammenpyrolyseverfahren hergestellt wird.

6. Verfahren gemäß Anspruch 5 in Kombination mit reduzierender, oxidierender oder inerter Gasatmosphäre zur Optimierung des Sinterverhaltens der sauerstoffpermeablen Membran.

## Claims

1. Use of a material for both a tight ceramic membrane conducting oxygen ions and electrons and thus permeable to oxygen to obtain oxygen from stagnant or flowing gas mixtures contain oxygen or reduction of partial oxygen pressure in the same, **characterized by** the fact that the material has the composition (Sr₁₋ₓ Caₓ)_{1-y}A_{y}Mn_{1-z}B_{z}O_{3-δ} where A represents Ba, Pb, Na, K, Y or elements of the lanthanides or a combination of these elements where B represents Mg, Al, Ga, In, Sn or elements of the 3d period or 4d period or a combination of these elements with values for x from 0.2 to 0.8, values for y from 0 to 0.4, values for z from 0 to 0.6 and values for δ which are obtained from the observance of the electron neutrality principle.

2. Use pursuant to claim 1 in which the oxygen-permeable membrane consists of a multiphase mixture of phases conducting electrons and/or ions which contains more than 10 % vol. membrane material.

3. Use pursuant to claim 1 in which the oxygen-permeable membrane has been applied to a porous support material whose percentage of pores is between 10 % and 85 %.

4. Use pursuant to claim 1 in which the surface of the oxygen-permeable membrane has been coated with a catalyst on one side or both sides to catalyze the exchange kinetics with the gas phase or the reaction of gaseous materials in the gas phase.

5. Method to produce an oxygen-permeable membrane from a material of the composition (Sr₁₋ₓ Caₓ)_{1-y}A_{y}Mn_{1-z}B_{z}O_{3-δ} where A represents Ba, Pb, Na, K, Y or elements of the lanthanides or a combination of these elements, where B represents Mg, Al, Ga, In, Sn or elements of the 3d period or 3d period or a combination of these elements with values for x ranging from 0.2 to 0.8, values for y ranging from 0 to 0.4, values for z ranging from 0 to 0.6 and values for δ which are obtained from the observance of the electron neutrality principle where the membrane consisting of the raw materials containing metal is manufactured by thermal treatment above 500 °C and the combination of such thermal treatment with processes of separating thin layers, such as slip casting, electrophoretic separation, a sol-gel process, a CVD and PVD process or a spray and flame-pyrolysis process.

6. The method of claim 5 in combination with a reduced, oxydizing or inert gas atmosphere to optimize the sintering behaviour of the oxygen-permeable membrane.

## Revendications

1. Emploi d'un matériau pour une membrane en céramique étanche conductrice aussi bien aux ions d'oxygène qu'aux électrons et ainsi perméable à l'oxygène pour l'obtention d'oxygène dans des mélanges de gaz en mouvement ou stagnant, contenant de l'oxygène ou en présence d'une réduction de pression partielle d'oxgène dans ces mêmes mélanges, caractérisé en cela par le fait que le matériau de la composition (Sr₁₋ₓCaₓ)_{1-y}A_{y}Mn_{1-z} B_{z} O_{3-δ}, disposé en partie A pour Ba, Pb, Na, K, Y ou pour des éléments des lanthanides ou une combinaison de ces éléments, en partie B pour Mg, Al, Ga, In, Sn, ou présente des éléments de période 3d ou de période 4d ou une combinaison de ces éléments avec des valeurs pour x de 0,2 à 0,8, des valeurs pour y de 0 à 0,4, des valeurs pour z de 0 à 0,6 et des valeurs pour δ qui résultent du respect du principe de la neutralité des électrons.

2. Emploi conforme à la revendication 1 en prenant en considération le fait que la membrane perméable à l'oxygène se compose d'une phase électronique de mélange multiphases et/ou de phases conductrices d'ions représentant plus de 10 % vol. du matériau de la membrane.

3. Emploi conforme à la revendication 1 en prenant en considération le fait que la membrane perméable à l'oxygène soit disposée sur un matériau de support poreux dont la proportion de pores se situe sur une plage de 10 % à 85 %.

4. Emploi conforme à la revendication 1 en prenant en considération le fait que la surface de la membrane perméable à l'oxygène soit couverte, sur une face ou sur les deux faces, d'un catalysateur afin de catalyser la cinétique d'échange avec la phase gazeuse ou la transformation en matériaux gazeux dans la phase gazeuse.

5. Procédé pour la fabrication d'une membrane composé d'un matériau de la composition (Sr₁₋ₓCaₓ)_{1-y}A_{y}Mn_{1-z} B_{z} O_{3-δ}, disposé en partie A pour Ba, Pb, Na, K, Y ou pour des éléments des lanthanides ou une combinaison de ces éléments, en partie B pour Mg, Al, Ga, In, Sn, ou présente des éléments de période 3d ou de période 4d ou une combinaison de ces éléments avec des valeurs pour x de 0,2 à 0,8, des valeurs pour y de 0 à 0,4, des valeurs pour z de 0 à 0,6 et des valeurs pour δ qui résulte du respect du principe de la neutralité des électrons en prenant en considération le fait que la membrane se composant de matériaux bruts contenant du métal soit fabriquée par un traitement en température au delà de 500 °C de même que par la combinaison d'un tel traitement en température avec un procédé pour la séparation d'épaisseur comme le « Slip-casting », la séparation par électrophorèse, un procédé gel-sol, un procédé « CVD » (dépôt chimique en phase vapeur) ou « PVD » (dépôt physique en phase vapeur) ou un procédé de pyrolyse à la flamme ou de vaporisation.

6. Procédé conforme à la revendication 5 en combinaison avec une atmosphère composée de gaz réducteur, oxydant ou inerte pour l'optimisation du comportement au frittage de la membrane perméable à l'oxygène.
